# EUROPEAN PATENT SPECIFICATION

(11) **EP 2 772 405 B1**
(45) Date of publication and mention of the grant of the patent: **24.07.2019**
(21) Application number: 14156497.1
(22) Date of filing: 25.02.2014
(51) Int. Cl.: B61B 13/04

(54) **A transport system or rather a vehicle for transporting goods and/or people, and the relative road infrastructure**
Transportsystem oder vielmehr ein Fahrzeug zum Transportieren von Waren und/oder Personen, und zugehörige Straßeninfrastruktur
Système de transport ou plutôt un véhicule de transport de marchandises et/ou de personnes et l'infrastructure routière associée

(30) Priority: 01.03.2013 IT FI20130040
(43) Date of publication of application: 03.09.2014
(73) Proprietor: Argos Engineering S.R.L., 51100 Pistoia (IT)
(72) Inventor: Bartolomei, Argeo, 51100 Pistoia (IT)
(74) Representative: Soldatini, Andrea

(56) References cited:
- WO-A1-99/36303
- DE-A1- 2 405 225
- FR-A1- 2 266 621
- US-A- 1 431 536
- US-A- 3 890 904
- US-A- 4 690 064
- US-A- 5 934 198

## Description

The present invention refers to a new type of transport system. In greater detail, the invention refers to a vehicle for transporting goods and/or people and to its own road infrastructure.

As it is known, there is a growing need of new means of transport that are capable of increasingly better integrate with the modern metropolitan areas. In particular the search is for way for mass or public transportation solutions which can be integrated with the existing road structure and with the requirements of traffic, contributing towards creating an additional mobility resource.

Particular attention is given to the fact that such transportation systems are safe and as ecological as possible. Means that exploit electric or magnetic traction are thus preferred.

It is further required that such systems can be used in a versatile manner according to the flow of passengers (for example as a function of the time of day and/or of the periods of the year).

Among the surface transportation systems that are most common there are the well known trams, which are widely used in numerous cities and indeed appreciated for their low pollution (they are therefore used also in valuable historical centres). However, even such a type of transportation has drawbacks which have not been solved. In particular, trams require a road infrastructure with rails (called tramway) which is particularly large and disturbing. The tramway indeed occupies most of the existing carriageway and this, in addition to considerable inconvenience for traffic, in some cases, also leads to a complete redesign of the road traffic flow, with a great inconvenience for its users.

Alternatively, magnetic traction transportation means have been developed, which circulate on suitable monorails. One example of this type of transport system is described in European patent publication EP0831000. The means of transport described in this document, this applying in general to all monorails, have some limitations. In particular, similarly to the tram, the road infrastructure is particularly large and difficult to integrate with existing roads.

Another example of known monorail is described in US3890904. The monorail described in said patent application has several drawbacks, and in particular the movement of the vehicle results no smooth, with jolts and sudden movements. The movement of the vehicle is therefore uncomfortable and also potentially hazardous.

The object of the present invention is therefore to provide an alternative solution to those known, which satisfies the aforementioned requirements.

In particular, one object of the present invention is to provide a transport system that is efficient and that at the same time can be integrated with the existing road structure, so as to adapt to the traffic flow requirements already present in a certain urban area.

Yet another object of the present invention is to provide a transport system that is flexible and that can be adapted to being installed according to integration solutions that are different with respect to existing road infrastructures.

A further object of the present invention is that of providing a transport system which is versatile, i.e. that makes it possible to respond to the usage requirements of the users in a rapid and efficient manner.

These and other objects are achieved with the transport system according to the invention, the essential characteristics of which are defined in the first of the attached claims. Further important characteristics are defined in the dependent claims.

The characteristics and the advantages of the transport system according to the present invention shall become clearer from the following description of an embodiment thereof given as an example and not for limiting purposes with reference to the attached drawings, in which:
- figure 1 shows a front view of the transport system according to the invention, and namely a locomotive vehicle that is associated with a road infrastructure; in particular the figure schematically shows the connection of the vehicle to a rail; it is visible the first wheel of a line of wheels which provide for the motion and the traction of the vehicle;
- figure 2 is a perspective view of the transport system of figure 1, showing a side of the vehicle on which a frame can be seen for containing rolling means for the connection in a cantilever fashion of the vehicle to the infrastructure;
- figure 3 is a cross-section view of the transport system of the previous figures showing a sketch of a person on board of the vehicle, wherein the figure further shows a pantograph electrical supply system, in addition to rolling means of the vehicle on the rail as well as, in only a schematic manner, shock-absorbing means of the wheel connected to such rolling means;
- figure 4 shows a first practical application of the transport system of the previous figures in which two locomotive vehicles are connected to the same road infrastructure, which has in this case two rails arranged on opposite sides of the infrastructure;
- figure 5 shows a variant of the transport system as in the application of figure 4, in this case the infrastructure permitting the movement of locomotive vehicles suspended from the road plane, above the carriageway;
- figure 6 shows a second application of the system, in which the infrastructure is arranged so as to define a side wall of the carriageway, in such a way that the locomotive vehicle is connected and circulates outside with respect to the same carriageway;
- figure 6a is an enlarged view of a detail of figure 6;

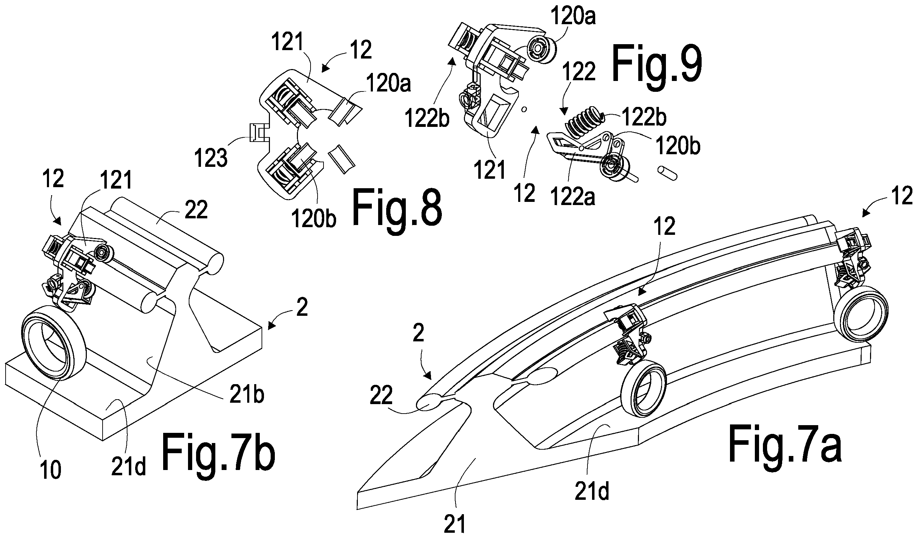

- figures 7a and 7b show two different perspective views of a section of the infrastructure of the previous figures, to which a first embodiment of rolling means of the locomotive vehicle is associated, shown separately;
- figures 8 and 9 are respectively a view from above and an exploded perspective view of the first embodiment of the rolling means;

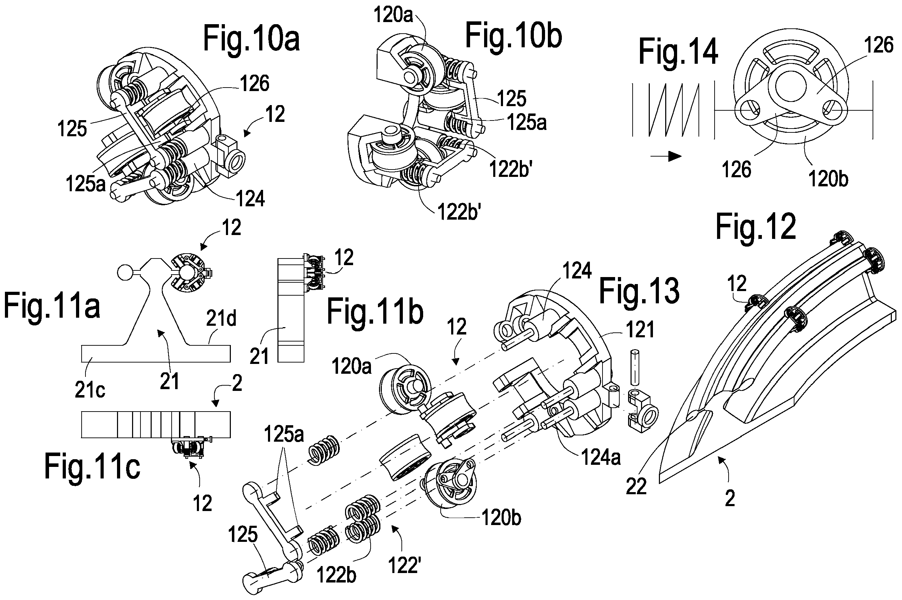

- figures 10a and 10b are representations in different perspective views of a second embodiment of the rolling means;
- figures from 11a to 12 show the rolling means of the previous figures 10a and 10b associated to the rail;
- figure 13 is an exploded view of the rolling means of the previous figures from 10a to 12;
- figure 14 shows a schematic view of a spring system that is operatively connected to an adjustment wheel of the second embodiment of the rolling means;
- figures 15a and 15b show two different working steps of movable rotating platform means of the transport system according to the invention used for inverting the direction of travel of the locomotive vehicle;
- figure 16 shows the movable platform means of the previous figures 15a and 15b used as an exchange between two travel lines; and

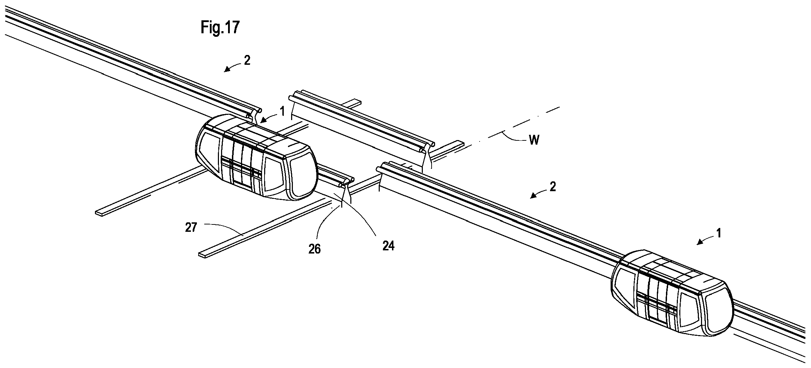

- figure 17 shows movable translating platform means of the transport system according to the invention.

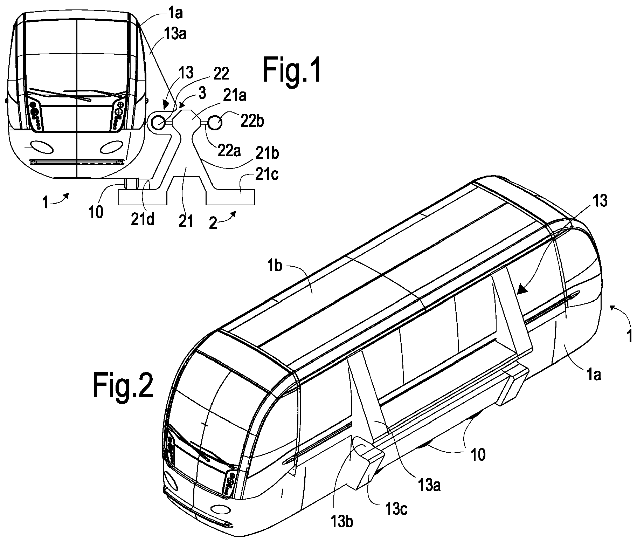

With reference to said figures, and in particular to figures 1 to 3, the transport system according to the invention comprises a transportation vehicle or locomotive 1 that is engaged in a sliding manner with a special road infrastructure 2. Being connected to the infrastructure, the vehicle follows a route defined by the infrastructure itself, which will run for a length that is suitable for the distance to be covered. The direction defined by the development in length of the infrastructure, corresponding to the direction of travel, shall be indicated in the rest of the description as longitudinal direction.

In greater detail, the engagement between locomotive vehicle and infrastructure is obtained through a linear guide coupling, generically indicated with reference numeral 3, that provides two elements, of which one is fixed 22, integrated with the infrastructure, and a movable element 13 that is integrated with the locomotive and is adapted to slide with respect to the fixed element during the movement of the locomotive itself. Such a linear engagement is obtained along one side 1a of the locomotive, according to what is shown in figure 1.

The locomotive vehicle 1 further comprises traction means that are arranged on the same side 1a adjacent to the infrastructure 2. Such traction means provide for the actual traction of the vehicle, since the linear engagement described above is completely passive.

In detail, according to a preferred application, the traction means comprise a single row of wheels 10 that are arranged at the base of the locomotive and support it, of which at least one is in charge of the traction/drive of the vehicle through friction on a rolling surface defined by the same infrastructure as shall be described in greater detail hereafter. Preferably, the locomotive vehicle comprises three wheels, each of them being a driving wheel.

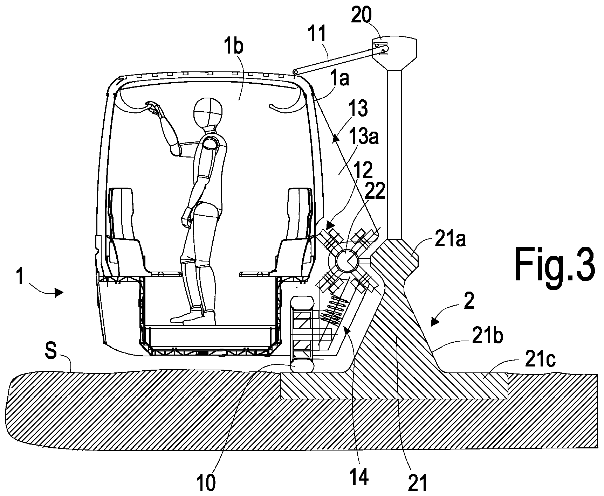

In greater detail, the infrastructure 2 is provided with a foot 21 having a triangular cross-section (that is, when sectioned according to a plane that is perpendicular to the longitudinal direction); therefore, the foot comprises two slanting side walls 21b that define the inclined sides of the triangle (and, as shall be seen later on, can define the rolling surface for the wheels 10), the inclination being intended with respect to a ground level S from which the infrastructure rises and on which the vehicle is supported through the wheels 10. The foot has, at the vertex of the triangle, a head 21a from which the fixed component, in the form of a rail 22, extends in a substantially parallel arrangement with respect to the ground level S (figure 3). The foot 21 again has, in a preferred solution, a base 21c that is recessed in the ground so that an upper surface thereof 21d is coplanar with the ground level S. In standard or lowered working conditions the wheels 10 rest and operate in friction on such a surface 21d.

As shown in figures 1 and from 4 to 6, the infrastructure can have two different rails 22 that project from opposite sides of the head of the foot 21, again parallel with respect to the ground level S. This configuration with a double rail makes it possible to have two vehicles connected to the infrastructure that travel at the same time, for example in opposite directions of travel.

The rail, which runs along the entire length of the infrastructure, is provided with a cylindrical body 22b with a circular cross-section, which indeed represents the very fixed element of the aforementioned engagement on which the movable element of the coupling, i.e. the one associated with the locomotive vehicle, engages. The movable element 13 has a frame 13a that projects from the aforementioned side 1a and a groove 13b that houses the body of the rail. The coupling makes use of rolling means 12, which are schematically represented in figure 3. The rolling means, preferably arranged so as to cover an extension corresponding to that covered by the wheels 10, make it possible for there to be the stable connection of the vehicle to the rail, and at the same time make it possible for the rail to guide the movement of the vehicle. In particular they are housed inside the frame 13a so as to project inside the groove 13b so as to slidingly engage onto an external surface of the rail 22. A bottom portion 13c of the frame 13a arranged below the groove 13b houses shock-absorbing means 14 of each wheel 10 (shown only schematically in the figures). However, such shock-absorbing means 14 could also not be provided.

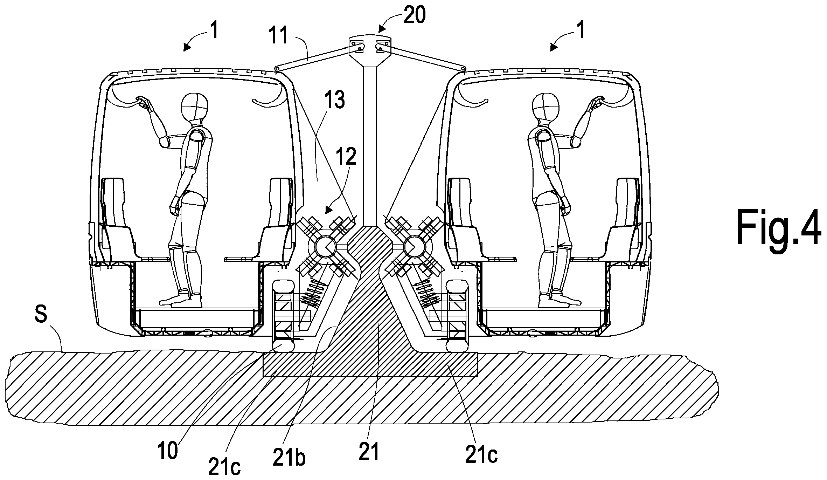

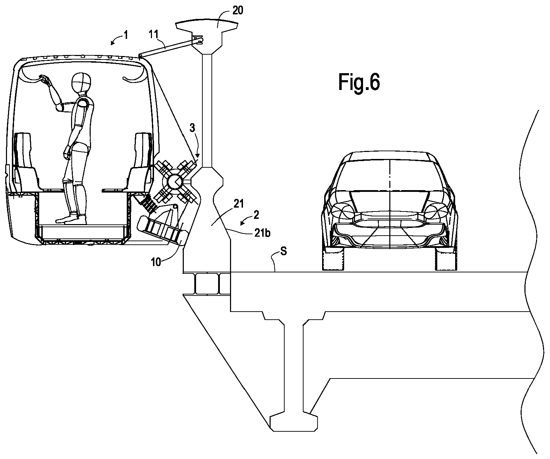

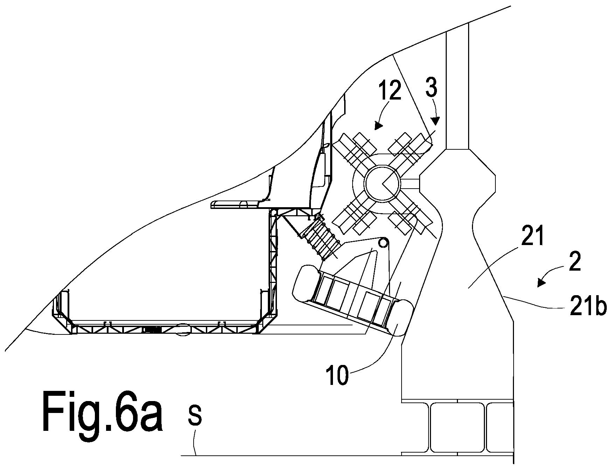

Reference will now be made to figures from 7 to 14 and to figures 4a and 6a.

The coupling 3 is such that as a result of the vehicle weight, the rail is subjected to a moment of force which is transmitted to the row of wheels 10, which are thus loaded with a weight such as to determine a wheel/ground friction sufficient and suitable for moving the vehicle (figure 4a). In order to be employed also in applications in which the vehicle travels above the carriageway, suspended with respect to the ground level (figure 6), the row of wheels can be tilted through tilting means (such as adjustment screws which act on a hinge connection) that are able to change the alignment by ± 5°, so that the wheel tread is in contact with the slanting side wall 21b of the foot 21 of the infrastructure; as mentioned, in such a suspended working condition, the slanting side wall 21b defines the rolling surface for the wheels 10. Thus, an axis X of the wheel is arranged in this case in a way such as to be parallel to the slanting side wall 21b. If present, the shock-absorbing means 14 of the wheel are oriented in accordance with the wheel itself.

The aforementioned rolling means 12 provide, in a first embodiment (shown in figures from 7a to 9), four rolls 120a, 120b which are arranged so as to be always in contact with the outermost surface of the rail and in particular of the body 22b. The rolls are arranged on a support body 121, angularly spaced by 90° with respect to one another so as to be radially distributed around the body of the rail. In detail, two rolls 120a are mounted on the support body 121 with an axis that is fixed through a pin on a bushing, whereas other two rolls 120b (mounted so as to oppose the detachment of the vehicle from the rail) provide for an elastic recovery mounting system 122 with a mobile axis that is elastically opposed, making it possible to compensate for the play on the body 22b of the rail. In particular, the system 122 comprises an arm 122a at an end of which the roll is linked, the arm being pivoted at a central point to the support body. At the opposite end a helicoidal spring 122b is fixed, an end of which is fixed to the support body 121.

The support body 121 is connected to the locomotive through a ball joint 123 which assists the orientation of the support body and therefore of the rolling means in the direction of travel, so as to adapt to the changes in the track.

Even in a second embodiment of the rolling means, shown in figures from 10a to 13 a support body 121 is connected through a ball joint 123 to the vehicle. Four rolls 120a, 120b are radially connected to the support body 121, of which two rolls 120a with a fixed axle and two damping rolls 120b that are equipped with an elastic recovery mounting system 122'.

The two embodiments differ for their elastic mounting system. Indeed in the second variant each damping roll is laterally associated with two springs 122b' which act between a cup 124 that is fixed to the support body, and a beam 125 that mutually connects the springs at a front end, the beam extending above and straddling the roll. Moreover, a pin 124a for guiding the spring rises up from the cup.

From the face of the beam that faces towards the roll, two arms 125a extend, in an intermediate position between the springs, directed parallel with respect to the axes of the springs. Each arm is connected to a first end of a respective rod 126 that is pivoted, at the other end, to the axle of the damping roll.

The elastic mounting of this second embodiment thus permits to obtain a moving engagement exclusively along a direction that is parallel with the direction of development of the rail.

The power unit of the locomotive, i.e. the on-board propulsion that actuates the rotation of at least one of the wheels, is, again in a preferred embodiment, of the electrical type, even if other power supply systems are not to be excluded (such as petrol, diesel, magnetic, etc.). In order to make use of the electric energy the locomotive is connected with an electrical supply network 20, which is integrated in the infrastructure 2, through pantograph means 11 of the *per se* known type (visible in figure 3 and in the following ones), and therefore not described in detail herein.

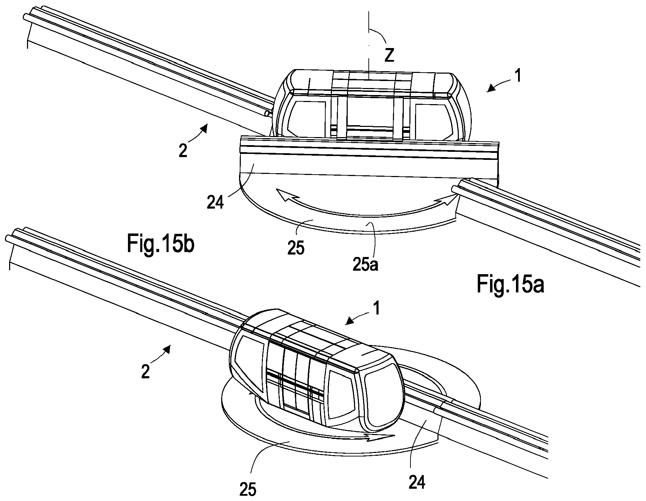

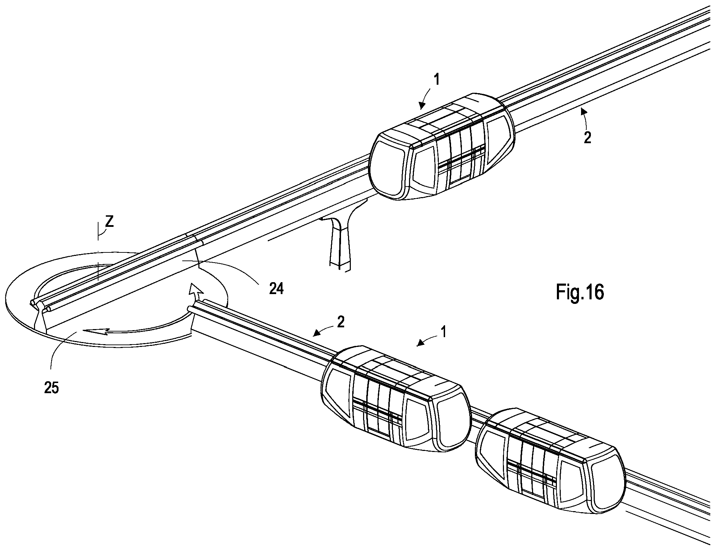

According to a further aspect of the invention, the transport system can comprise mobile platform means that are capable of inverting the direction of travel of the locomotive vehicle, connecting and/or disconnecting the latter from the infrastructure, acting as exchanges between two or more travel lines. Entering into greater detail, with reference to figures 15a to 16, the infrastructure has at least one mobile section 24. Such an infrastructure section is mounted on a mobile platform 25 adapted to turn around an axis Z perpendicular to the ground. The mobile platform has a flat development and it is substantially arranged at ground level. The section 24 is integral with a top main surface 25a of the platform (surface facing away from the ground). The section is thus passively set into rotation by the platform; as a result, also the locomotive vehicle can be brought into rotation. As can be seen in the aforementioned figures, this type of platform can be used to both invert the direction of travel of the vehicle (fig.15a, 15b) and as an exchange between two different travel lines (fig.16). The rotating platform described above can also be used at the end stop of the track, to invert the direction of travel of the vehicle.

As an alternative, the section 24 can be fixedly mounted on a second type of platform 26 of the translating type. In this case, the platform is mounted on linear guides 27 that are arranged perpendicular to the longitudinal movement direction and that define a crosswise direction W; the platform can thus translate according to such a direction W so as to connect or disconnect the section 24 to/from the infrastructure. Passively, the vehicle engaged with the section, is also moved.

The platform with translation movement described above is advantageously used to connect and/or disconnect a vehicle to/from the line in the case of malfunctioning, break downs or so as to vary the number of vehicles circulating simultaneously (so as to meet the requirements of the users).

The platform means described above are driven by a computerised control and management system of the entire transport system. Such a control and management system, in addition to verifying the correct operation conditions, also carries out, for example, the control of the number of vehicles circulating as well as controlling the introduction of further vehicles on the track (or *vice versa* the disconnection from the track).

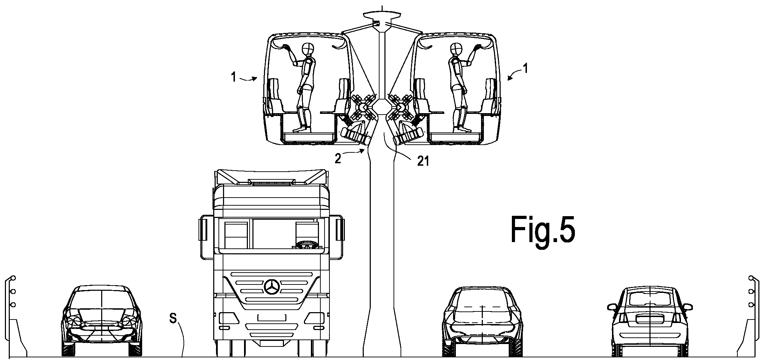

The transport system described above presents several advantages. Firstly, it can also be adapted to unconventional configurations, for example, projecting from the side of the carriageway above scarps, rivers or the like. In such a configuration (represented for example in figure 6) the carriageway is completely clear, being it not occupied by the rail infrastructure 2. Therefore the transport system can be installed with minimal changes to the pre-existing road network. Even the solution illustrated in figure 5, or rather the one that provides the transport means circulating in suspension above the carriageway, reaches the same purpose of having minimum impact on the traffic flow.

One further aspect to be noted is that the road infrastructure of the transport system according to the invention makes it possible, in the version with the double rail, for two locomotive vehicles to circulate simultaneously. This is a result that is not obtained by other known transportation types. Considering for example tramways or magnetic traction monorail systems, it is only possible to obtain the simultaneous circulation of two vehicles by doubling the infrastructure (a double row of rails or double monorail line).

In light of the mobile platform means described above, the locomotive vehicles can be introduced in the track defined by the infrastructure in a number and with timings such as to satisfy the requirement of the users in the various moments of the day or year. For example, at rush hour, a greater number of vehicles, spaced even at a very small distance from one another could be introduced in the track, such a number being instead reduced in the less crowded hours of the day. In this respect, the introduction or the disconnection of a vehicle onto/from the track is obtained very quickly, in the order of 3 minutes. Therefore the train of vehicles used in the transport system at issue can vary in number as desired. Moreover, contrary to known systems, in the system here described the vehicles can carry out an inversion in the direction of travel or of track.

Again, the vehicle is provided with self-traction; this means that it can either constitute the locomotive of a series of passive carriages, or be used independently.

In addition to those described above, the transport system can provide the use of further power supply sources for example it can use an electromagnetic induction power supply system or rechargeable batteries (for short journeys stopping at the end of the line). Again, wireless charging systems can be used, that is, with the batteries on board of the locomotive that are recharged through the induction of energy emitted from cables incorporated in the infrastructure. The transport system is therefore suitable for being installed even in valuable areas such as historical centres of remarkable artistic value, natural oasis, parks, residential areas etc. The infrastructure can also be provided with solar panels that supply auxiliary energy to the system or to its utility accessories (signs, boards, lighting, etc.).

The vehicle is preferably made from aluminium just like the rail which is made starting from a tube of aluminium or aluminium alloy. The use of such a material makes it possible to have a structure that is resistant but at the same time very light, which promotes its use in applications in a cantilever fashion with wheels, which do not rest on the ground, as described above.

The present invention has been described with reference to preferred embodiments thereof. It should be understood that other embodiments may exist which belong to the same inventive core, all covered by the scope of protection of the following claims.

## Claims

1. A transport system comprising a locomotive vehicle (1) engaged in a sliding arrangement (3) to an adapted road infrastructure (2) said sliding arrangement comprising a linear guide coupling that includes two elements, a fixed element (22) integrated with said infrastructure and a mobile element (13, 12) integrated with the vehicle and able to slide with respect to the fixed element during the movement of the vehicle itself, the vehicle further comprising traction means (10) adapted to realised the traction of the vehicle through a friction action on a rolling surface (21b, 21d) defined by said infrastructure (2), said sliding arrangement (3) is realized along a side (1a) of the vehicle (1) so that said vehicle is engaged to the infrastructure in a cantilever fashion, said traction means (10) being arranged in a single row along said side (1a), said traction means comprising a single row of wheels, at least one of said wheels being a driving wheel, the transport system being **characterised in that** said fixed element is a rail (22) that runs along the entire length of said infrastructure and presents a cylindrical body (22b) on which said mobile element is engaged, said mobile element comprising a frame (13a) that projects from said side (1a) and presents a groove (13b) that housed said cylindrical body of said rail, said mobile element further comprising rolling means (12) housed into said frame (13a) and projecting inside said groove (13b) to engage in a sliding manner onto an external surface of said cylindrical body (22b), said rolling means (12) comprising rolls (120a, 120b) arranged on a support body (121), the latter being fixed to said vehicle through a ball joint (123), said rolls (120a, 120b) are staggered of 90° each other and are in number of four.

2. The transport system according to claim 1, wherein said four rolls (12a) comprise two fixed rolls (120a) arranged on said support body in a fixed manner, and two damping rolls (120b) each fixed to said support body through an elastic recovery mounting system (122, 122').

3. The transport system according to claim 2, wherein said elastic recovery mounting system (122) comprises an arm (122a) pivoted at a central point to said support body, said damping roll being mounted on a first end of said arm, at an opposite end a helicoidal spring (122b) being fixed, an end of which being fixed to the support body (121).

4. The transport system according to claim 2, wherein said elastic mounting system (122') comprises two springs (122b') placed at the sides of said damping roll, each of said springs acting between a cup (124) fixed to said support body and a respective end of a beam (125) that mutually links said springs and projects above and straddling said roll, two arms (125a) extending from said beam in a parallel arrangement with respect to an axis of said springs, each of said arms being connected to an end of a respective rod (126) pivoted to the axis of said damping roll at the opposite end.

5. The transport system according any of the claims from 1 to 4, wherein said rolling means (12) are organised inside said framework (13) to cover an extension corresponding to the extension interested by said row of wheel (10).

6. The transport system according to any of the previous claims, wherein said road infrastructure (2) presents a foot (21) comprising slanting side walls (21b), the inclination being intended with respect to the ground level (S), said foot also comprising a head (21a) from which said rail extends in a substantially parallel arrangement with the ground level, said foot (21) presents a base (21c) adapted to be recessed in the ground so that a upper surface (21d) of said base results coplanar to said ground level (S).

7. The transport system according to claim 6, wherein said vehicle comprise tilting means adapted to tilt said row of wheel in such a way that their tread results in contact with said tilted side walls (21b).

8. The transport system according to claim 7, wherein said rolling surface, is defined, in a standard working condition, by said upper surface (21d) while, in a relieved operating condition, by said tilted side wall (21b).

9. The transport system according any of the previous claims, wherein said vehicle is associated via pantograph means (11) to an electrical supply network (20) housed into said infrastructure (2).

10. The transport system according to any of the previous claims, wherein said infrastructure (2) comprises at least one mobile section (24) mounted on a turning platform (25) adapted to turn said movable section (24) with respect to an axis (Z) perpendicular to the ground level (S) and consequently adapted to turn said vehicle when associated to said section, so that to invert or deviate the direction of travel of the vehicle itself.

11. The transport system according any of the claims from 1 to 9, wherein said infrastructure (2) comprise at least a mobile section (24) fixed to a mobile platform (26) adapted to translate said section according to a direction (W) transversal with respect to the direction of travel, to connect or disconnect said section from said infrastructure and consequently to connect or disconnect from said infrastructure said vehicle when associated to said section.

## Patentansprüche

1. Transportsystem, das ein Fortbewegungsgefährt (1) enthält, das in einer gleitenden Anordnung (3) mit einer angepassten Straßeninfrastruktur (2) in Eingriff ist, wobei die gleitende Anordnung eine lineare Führungskopplung enthält, die zwei Elemente enthält, ein fixiertes Element (22), das in die Infrastruktur integriert ist, und ein mobiles Element (13, 12), das in das Gefährt integriert ist und geeignet ist, während der Bewegung des Gefährtes selbst bezüglich dem fixierten Element zu gleiten, wobei das Gefährt ferner Traktionseinrichtungen (10) enthält, die ausgelegt sind, um die Traktion des Gefährtes durch eine Reibungsaktion auf einer Rolloberfläche (21b, 21d) zu realisieren, die durch die Infrastruktur definiert ist, wobei die gleitende Anordnung (3) längs einer Seite (1a) des Gefährtes (1) realisiert ist, so dass das Gefährt mit der Infrastruktur in einer auskragenden Weise in Eingriff ist, wobei die Traktionseinrichtungen (10) in einer einzelnen Reihe längs der Seite (1a) angeordnet sind, wobei die Traktionseinrichtungen (10) eine einzelne Reihe von Rädern enthalten, wobei wenigstens eines der Räder ein angetriebenes Rad ist wobei das Transportsystem **dadurch gekennzeichnet ist, dass** das fixierte Element eine Schiene (22) ist, die längs der gesamten Länge der Infrastruktur verläuft und einen zylindrischen Körper (22b) präsentiert, an dem das mobile Element in Eingriff ist, das mobile Element einen Rahmen (13a) enthält, der von der Seite (1a) vorsteht und eine Nut (13b) präsentiert, in der der zylindrische Körper der Schiene untergebracht ist, das mobile Element ferner Rolleinrichtungen (12) enthält, die in dem Rahmen (13a) untergebracht sind und nach innerhalb der Nut (13b) vorstehen, um in einer gleitenden Weise an der Außenoberfläche des zylindrischen Körpers (22b) in Eingriff zu sein, die Rolleinrichtungen (12) Rollen (120a, 120b) enthalten, die an einem Haltekörper (121) angeordnet sind, der letztere an dem Gefährt durch ein Kugelgelenk (123) fixiert ist, die Rollen (120a, 120b) bezüglich einander um 90 ° versetzt und in der Anzahl vier sind.

2. Transportsystem nach Anspruch 1, wobei die vier Rollen (12a) zwei fixierte Rollen (120a), die an dem Haltekörper in einer fixierten Weise angeordnet sind, und zwei Dämpfungsrollen (120b) enthalten, von denen jede an dem Haltekörper durch ein elastisches Rückgewinnungsmontagesystem (122, 122') fixiert ist.

3. Transportsystem nach Anspruch 2, wobei das elastische Rückgewinnungsmontagesystem (122) einen Arm (122a) enthält, der an einem zentralen Punkt an dem Haltekörper drehbar ist, wobei die Dämpfungsrolle an einem ersten Ende des Arms montiert ist, wobei an einem entgegengesetzten Ende eine Spindelfeder (122b) fixiert ist, von der ein Ende an dem Haltekörper (121) fixiert ist.

4. Transportsystem nach Anspruch 2, wobei das elastische Montagesystem (122') zwei Federn (122b') enthält, die an den Seiten der Dämpfungsrolle platziert sind, wobei jede der Federn zwischen einer Schale (124), die an dem Haltekörper fixiert ist, und einem entsprechenden Ende eines Trägers (125) wirkt, der beiderseits die Federn verbindet und oberhalb den und die Rollen überspannend vorsteht, wobei zwei Arme (125a) von dem Träger in einer parallelen Anordnung bezüglich einer Achse der Federn ausgehen, wobei jeder der Arme mit einem Ende einer entsprechenden Stange (126) verbunden ist, die an der Achse der Dämpfungsrolle an dem entgegengesetzten Ende drehbar ist.

5. Transportsystem nach einem der Ansprüche 1 bis 4, wobei die Rolleinrichtungen (12) innerhalb des Rahmens (13) organisiert sind, um eine Verlängerung abzudecken, die der Verlängerung entspricht, die für die Radreihe (10) von Interesse ist.

6. Transportsystem nach einem der vorhergehenden Ansprüche, wobei die Straßeninfrastruktur (2) einen Fuß (21) präsentiert, der schräge Seitenwände (21b) hat, wobei die Neigung hinsichtlich dem Bodenlevel (S) vorgesehen ist, wobei der Fuß auch einen Kopf (21b) enthält, von dem aus sich die Schiene in einer im Wesentlichen parallelen Anordnung mit dem Bodenlevel erstreckt, wobei der Fuß (21) eine Basis (21c) präsentiert, die ausgelegt ist, um im Boden ausgenommen zu sein, so dass eine obere Oberfläche (21d) der Basis koplanar mit dem Bodenlevel (S) resultiert.

7. Transportsystem nach Anspruch 6, wobei das Gefährt Neigungseinrichtungen enthält, die ausgelegt sind, um die Radreihe in einer solchen Weise zu neigen, so dass ihre Lauffläche in Kontakt mit den geneigten Seitenwänden (21b) resultiert.

8. Transportsystem nach Anspruch 7, wobei die Rolloberfläche in einem Standard-Arbeitszustand durch die obere Oberfläche (21d) definiert ist, während sie in einem entlasteten Arbeitszustand durch die geneigte Seitenwand (21b) definiert ist.

9. Transportsystem nach einem der vorhergehenden Ansprüche, wobei das Gefährt via Pantographeinrichtungen (11) mit einem elektrischen Versorgungsnetzwerk (20) verbunden ist, das in der Infrastruktur (2) untergebracht ist.

10. Transportsystem nach einem der vorhergehenden Ansprüche, wobei die Infrastruktur (2) wenigstens eine mobile Sektion (24) enthält, die an einer Wendeplattform (25) montiert ist, die ausgelegt ist, um die bewegliche Sektion (24) bezüglich einer Achse (Z) senkrecht zu dem Bodenlevel (S) zu wenden, und konsequenterweise ausgelegt ist, um das Gefährt zu wenden, wenn es mit der Sektion verbunden ist, um so die Fahrtrichtung des Gefährts selbst umzukehren oder abzulenken.

11. Transportsystem nach einem der Ansprüche 1 bis 9, wobei die Infrastruktur (2) wenigstens eine mobile Sektion (24) enthält, die an einer mobilen Plattform (26) fixiert ist, die ausgelegt ist, um die Sektion entsprechend einer Richtung (W) transversal bezüglich der Fahrtrichtung zu versetzen, um die Sektion zu verbinden mit oder zu trennen von der Infrastruktur, und konsequenterweise, um das Gefährt zu verbinden mit oder zu trennen von der Infrastruktur, wenn es mit der Sektion in Verbindung steht.

## Revendications

1. Système de transport comprenant un véhicule de type locomotive (1) coopérant, dans un agencement par coulissement (3), avec une infrastructure routière adaptée (2), ledit agencement par coulissement comprenant un couplage de guidage linéaire qui comprend deux éléments, un élément fixe (22) intégré à ladite infrastructure et un élément mobile (13, 12) intégré au véhicule et apte à coulisser par rapport à l'élément fixe pendant le mouvement du véhicule lui-même, le véhicule comprenant en outre des moyens de traction (10) adaptés pour réaliser la traction du véhicule via une action de friction sur une surface de roulement (21b, 21d) définie par ladite infrastructure (2), ledit agencement par coulissement (3) étant réalisé le long d'un côté (1a) du véhicule (1) de façon que ledit véhicule coopère en porte-à-faux avec l'infrastructure, lesdits moyens de traction (10) étant disposés sur un seul rang le long dudit côté (1a), lesdits moyens de traction comprenant une seule rangée de roues, au moins une des dites roues étant une roue d'entraînement, le système de transport étant **caractérisé en ce que** ledit élément fixe est un rail (22) qui s'étend sur toute la longueur de ladite infrastructure et présente un corps cylindrique (22b) avec lequel coopère ledit élément mobile, ledit élément mobile comprenant un cadre (13a) qui fait saillie à partir du côté (1a) et présente une gorge (13b) dans laquelle est logé ledit corps cylindrique dudit rail, ledit élément mobile comprenant en outre des moyens de roulement (12) logés dans ledit cadre (13a) et faisant saillie à l'intérieur de ladite gorge (13b) pour coopérer de façon coulissante sur une surface extérieure dudit corps cylindrique (22b), lesdits moyens de roulement (12) comprenant des galets de roulement (120a, 120b) agencés sur un corps de support (121), ce dernier étant fixé audit véhicule par l'intermédiaire d'une rotule (123), lesdits galets de roulement (120a, 120b) étant décalés de 90° les uns des autres et au nombre de quatre.

2. Système de transport selon la revendication 1, dans lequel lesdits quatre galets de roulement (12a) comprennent deux galets fixes (120a) agencés de manière fixe sur ledit corps de support et deux galets amortisseurs (120b) chacun fixé au dit corps de support via un système de montage à récupération d'énergie élastique (122, 122').

3. Système de transport selon la revendication 2, dans lequel ledit système de montage à récupération d'énergie élastique (122) comprend un bras (122a) monté pivotant en un point central par rapport audit corps de support, ledit galet amortisseur étant monté sur une première extrémité dudit bras, à une extrémité opposée du dit bras étant fixé un ressort hélicoïdal (122b) dont l'autre extrémité est fixée au corps de support (121).

4. Système de transport selon la revendication 2, dans lequel ledit système de montage élastique (122') comprend deux ressorts (122b') placés sur les côtés dudit galet amortisseur, chacun desdits ressorts agissant entre une coupelle (124) fixée audit corps de support et une extrémité respective d'une came (125) reliant mutuellement lesdits ressorts et faisant saillie en chevauchant au-dessus dudit galet, deux bras (125a) s'étendant à partir de ladite came dans une disposition parallèle par rapport à un axe desdits ressorts, chacun desdits bras étant relié à une extrémité d'une tige respective (126) montée pivotante à l'extrémité opposée de l'axe dudit galet amortisseur.

5. Système de transport selon l'une quelconque des revendications 1 à 4, dans lequel lesdits moyens de roulement (12) sont agencés à l'intérieur dudit cadre (13) pour couvrir une extension correspondant à l'extension intéressée par ladite rangée de roues (10).

6. Système de transport selon l'une quelconque des revendications précédentes, dans lequel ladite infrastructure routière (2) présente un pied (21) comprenant des parois latérales inclinées (21b), l'inclinaison étant prévue par rapport à la surface du sol (S), ledit pied comprenant aussi une tête (21a) à partir de laquelle s'étend ledit rail dans une disposition sensiblement parallèle à la surface du sol, ledit pied (21) présentant une base (21c) adaptée pour être enfoncée dans le sol de façon qu'une surface supérieure (21d) de ladite base se trouve dans le plan de la surface du sol (S).

7. Système de transport selon la revendication 6, dans lequel ledit véhicule comprend des moyens d'inclinaison adaptés pour incliner ladite rangée de roues de telle sorte que leur bande de roulement reste en contact avec lesdites parois latérales inclinées (21b).

8. Système de transport selon la revendication 7, dans lequel ladite surface de roulement est définie, dans une condition de fonctionnement normal, par ladite surface supérieure (21d), tandis que, dans une condition de fonctionnement surélevée, elle est définie par ladite paroi latérale inclinée (21b).

9. Système de transport selon l'une quelconque des revendications précédentes, dans lequel ledit véhicule est associé à un réseau d'alimentation électrique (20) par l'intermédiaire d'un pantographe (11) logé dans ladite infrastructure (2).

10. Système de transport selon l'une quelconque des revendications précédentes, dans lequel ladite infrastructure (2) comprend au moins un tronçon mobile (24) monté sur une plate-forme tournante (25) adaptée pour faire tourner ledit tronçon mobile (24) par rapport à un axe (Z) perpendiculaire à la surface du sol (S) et, par conséquent, apte à faire tourner ledit véhicule lorsqu'il est associé audit tronçon, de manière à inverser ou dévier le sens de la marche du véhicule lui-même.

11. Système de transport selon l'une quelconque des revendications 1 à 9, dans lequel ladite infrastructure (2) comprend au moins un tronçon mobile (24) fixé à une plate-forme mobile (26) adaptée pour translater ledit tronçon selon une direction (W) transversale par rapport à la direction de la marche, pour connecter ou déconnecter ledit tronçon de ladite infrastructure et par conséquent pour connecter ou déconnecter ledit véhicule de ladite infrastructure lorsqu'il est associé au dit tronçon.
